# EUROPÄISCHE PATENTSCHRIFT

(11) **EP 3 169 734 B1**
(45) Veröffentlichungstag und Bekanntmachung des Hinweises auf die Patenterteilung: **14.11.2018**
(21) Anmeldenummer: 15735889.6
(22) Anmeldetag: 30.06.2015
(51) Int. Cl.: C09D 5/08

(54) **STAHLPRODUKT MIT EINER KORROSIONSSCHUTZBESCHICHTUNG AUS EINER ALUMINIUMLEGIERUNG SOWIE VERFAHREN ZU DESSEN HERSTELLUNG**
STEEL PRODUCT WITH AN ANTICORROSIVE COATING OF ALUMINIUM ALLOY AND METHOD FOR THE PRODUCTION THEREOF
PRODUIT EN ACIER COMPRENANT UN REVÊTEMENT DE PROTECTION ANTICORROSION CONSTITUÉ D'UN ALLIAGE D'ALUMINIUM AINSI QUE SON PROCÉDÉ DE FABRICATION

(30) Priorität: 16.07.2014 DE 102014109943
(43) Veröffentlichungstag der Anmeldung: 24.05.2017
(73) Patentinhaber: ThyssenKrupp Steel Europe AG, 47166 Duisburg (DE); thyssenkrupp AG, 45143 Essen (DE)
(72) Erfinder: BLUMENAU, Marc, 44287 Dortmund (DE); MOLL, Oliver, 46485 Wesel (DE); PETERS, Michael, 47533 Kleve (DE); WUTTKE, Thiemo, 45659 Recklinghausen (DE)
(74) Vertreter: thyssenkrupp Intellectual Property GmbH
(86) Internationale Anmeldenummer: PCT/EP2015/064820
(87) Internationale Veröffentlichungsnummer: WO 2016/008714

(56) Entgegenhaltungen:
- WO-A2-2006/050915
- WO-A2-2007/117270
- GB-A- 2 452 552
- US-A1- 2006 099 332
- US-A1- 2008 138 615

## Beschreibung

Die Erfindung betrifft ein Stahlprodukt, insbesondere Stahlflachprodukt, mit einer metallischen Korrosionsschutzbeschichtung aus einer Aluminiumlegierung sowie ein Verfahren zur Herstellung eines solchen Stahlprodukts.

Unter einem Stahlflachprodukt wird im vorliegenden Kontext Stahlprodukte verstanden, deren Breite und Länge jeweils ein Vielfaches deren Dicke betragen. Ein Stahlflachprodukt ist beispielsweise ein Stahlband oder eine Stahlplatine.

Die Korrosionsbeständigkeit von Aluminium wird im Wesentlichen durch die sich auf Aluminium ausbildende Al₂O₃-Deckschicht und deren Stabilität beeinflusst. Eine Korrosion von Aluminium findet nur in stark sauren Medien oder alkalischen Lösungen statt. Der Einsatzbereich von Aluminiumlegierungen beschränkt sich daher üblicherweise auf den pH-Bereich von 5 - 8. Ausnahmen existieren insoweit in Bezug auf konzentrierte sauerstoffhaltige Säuren wie Salpeter-, Essig- und Phosphorsäure. Weiterhin ist Aluminium in NH₃-Lösungen gut bis sehr gut beständig.

Aluminiumbeschichtungen für Stahlprodukte kommen hauptsächlich in Form von AlSi-Legierungen zum Einsatz als Schutz gegenüber Verzunderung bei Hochtemperaturanwendungen. Zum Beispiel ist das Ziel der AlSi-Beschichtung, eine Verzunderung von Stahlblechen im Prozess des Warmumformens zu verhindern. Durch das Warmumformen (Presshärten) wird die Beschichtung brüchig und bietet dann keinen zufriedenstellenden Korrosionsschutz mehr.

US 2006/0099332 A1 offenbart eine metallische Oberfläche, die mit einer oder mehreren Korrosionsschutzschichten A, B und C beschichtet ist. Die Korrosionsschutzschicht A enthält mindestens entweder A1) eine chemische Verbindung zur Vorbehandlung oder A2) eine organische Verbindung oder A3) eine Siliziumverbindung, die mindestens ein Silan, ein Silanol, ein Siloxan oder ein Polysiloxan enthält. Die Korrosionsschutzschicht B enthält mindestens eine Siliziumverbindung, die als Lösung oder Dispersion aufgetragen wird und mindestens ein Silan, ein Silanol, ein Siloxan oder ein Polysiloxan oder eine Mischung daraus enthält. Die Korrosionsschutzschicht C enthält mindestens eine organische Verbindung.

GB 2 452 552 A offenbart eine Schutzschicht gegen mikrobielle Korrosion, welche auf metallische Oberflächen aufgetragen werden kann, wobei die aufzutragende Suspension einen Mikroorganismus enthält.

WO 2007/117270 A2 offenbart ein Verfahren zur Verbesserung des Korrosionswiderstands von Metallen. Dabei wird Magnesiumpulver, welches mindestens 50 Gew.-% Magnesium enthält, und ein Binder auf die Oberfläche aufgetragen.

WO 2006/050915 A2 offenbart eine wässrige Zusammensetzung zur Beschichtung metallischer Oberflächen. Die Lösung enthält mindestens eine organische Verbindung, mindestens eine Titan-, Hafnium-, Zirkon- Aluminium- oder/und Bor-haltige Verbindung, mindestens eine Art Kationen der Metalle der 1.-3. und 5.-8. Nebengruppe sowie der 2. Hauptgruppe.

US 2008/0138615 A1 offenbart eine wässrige Zusammensetzung zur Beschichtung metallischer Oberflächen zum Beispiel zur Vorbehandlung vor einer Lackierung. Die Lösung enthält darüber hinaus mindestens eine Siliziumverbindung, die ein Silan, ein Silanol, ein Siloxan oder ein Polysiloxan ist, mindestens eine organische Verbindung, mindestens eine den pH-Wert beeinflussende Substanz, mindestens zwei Komponenten aus Titan-, Hafnium-, Zirkon-, Aluminium- und/oder Bor-Verbindungen und mindestens ein Kation der Metalle der 1.-3. und 5.-8. Nebengruppe sowie der 2. Hauptgruppe.

Allerdings bieten Beschichtungen aus AlSi-Legierungen auch dann, wenn sie nicht warmumgeformt werden, nur einen mittelmäßigen Korrosionsschutz.

Davon ausgehend lag der Erfindung die Aufgabe zugrunde, ein Stahlprodukt, insbesondere Stahlflachprodukt der eingangs genannten Art bereitzustellen, welches über eine hohe Medienbeständigkeit, insbesondere eine hohe Säure- und Korrosionsbeständigkeit verfügt.

Gelöst wird diese Aufgabe durch ein Stahlprodukt mit den in Anspruch 1 angegebenen Merkmalen sowie durch ein Verfahren mit den in Anspruch 9 angegebenen Merkmalen. Bevorzugte und vorteilhafte Ausgestaltungen des erfindungsgemäßen Stahlprodukt bzw. des erfindungsgemäßen Verfahrens sind in den auf Anspruch 1 oder 9 rückbezogenen Unteransprüchen angegeben.

Das erfindungsgemäße Stahlprodukt, insbesondere Stahlflachprodukt, ist mit einer metallischen Korrosionsschutzbeschichtung aus einer Aluminiumlegierung versehen, wobei die Aluminiumlegierung neben A1 und unvermeidbaren Verunreinigungen aus folgenden Elementen besteht:

| | | |
|---|---|---|
| | Mn | 0,2 - 2 Gew.-% |
| und/oder | Mg | 0,2 - 7 Gew.-% |
| | Fe | 0,5 - 5 Gew.-% als Pflichtelement |
| | Ti | 0,05 - 0,4 Gew.-% |
| und/oder | Zr | 0,05 - 0,4 Gew.-% |

und optional einem oder mehreren der folgenden Elemente

| | |
|---|---|
| Si | 0,1 - 15 Gew.-% |
| Ni | 0,05 - 2 Gew.-% |
| Sb | 0,05 - 0,4 Gew.-% |
| Cr | 0,05 - 0,4 Gew.-% |
| Co | max. 0,4 Gew.-% |
| Cu | max. 0,1 Gew.-% |
| Zn | max. 0,1 Gew.-% |

sowie optional weiteren Begleitelementen, deren Einzelgehalt höchstens 0,05 Gew.-% und deren Summe höchstens 0,15 Gew.-% beträgt.

Das erfindungsgemäße Verfahren ist dementsprechend durch folgende Schritte gekennzeichnet:
- Bereitstellen eines Stahlprodukts, insbesondere Stahlflachprodukts in warm- oder kaltgewalztem Zustand,
- Aktivieren der Oberfläche des Stahlprodukts, so dass passive Oxide von der Oberfläche des Stahlprodukts entfernt werden, und
- Beschichten des oberflächenaktivierten Stahlprodukts durch Eintauchen in ein schmelzflüssiges Beschichtungsbad, welches eine Aluminiumlegierung enthält, die neben A1 und unvermeidbaren Verunreinigungen aus folgenden Elementen zusammengesetzt ist:

| | | |
|---|---|---|
| | Mn | 0,2 - 2 Gew.-% |
| und/oder | Mg | 0,2 - 7 Gew.-% |
| | Fe | 0,5 - 5 Gew.-% als Pflichtelement |
| | Ti | 0,05 - 0,4 Gew.-% |
| und/oder | Zr | 0,05 - 0,4 Gew.-%. |

und optional einem oder mehreren der folgenden Elemente

| | |
|---|---|
| Si | 0,1 - 15 Gew.-% |
| Ni | 0,05 - 2 Gew.-% |
| Sb | 0,05 - 0,4 Gew.-% |
| Cr | 0,05 - 0,4 Gew.-% |
| Co | max. 0,4 Gew.-% |
| Cu | max. 0,1 Gew.-% |
| Zn | max. 0,1 Gew.-% |

sowie optional weiteren Begleitelementen, deren Einzelgehalt höchstens 0,05 Gew.-% und deren Summe höchstens 0,15 Gew.-% beträgt.

Mangan (Mn) führt dazu, dass eisenhaltige Phasen bzw. Nadeln gebunden bzw. in eine weniger schädliche Morphologie umgewandelt werden, so dass die Korrosionsbeständigkeit im Vergleich zu anderen auf Aluminium basierenden Beschichtungen signifikant gesteigert wird. Bei einem Mn-Gehalt des schmelzflüssigen Beschichtungsbades von weniger als 0,2 Gew.-% konnte dieser positive Effekt seitens der Erfinder nicht festgestellt werden. Ein Mn-Gehalt von über 7,0 Gew.-% verbesserte diesen Effekt nicht weiter, sondern führte zu einer erhöhten Schlackenbildung im Beschichtungsbad (Schmelzenbad), welche die Qualität der Beschichtung negativ beeinflussen kann. Ausgehend von einem Mn-Gehalt von 0,2 Gew.-% konnte bei steigendem Mn-Gehalt eine Erhöhung der Warmfestigkeit festgestellt werden. Letzteres dürfte seinen Grund in der rekristallisationshemmenden Wirkung von Mangan haben.

Magnesium (Mg) als Legierungselement kann sowohl eine Mischkristallhärtung als auch in Verbindung mit anderen Legierungselementen (wie z.B. Silizium) eine Ausscheidungshärtung bewirken. Seitens der Erfinder wurde festgestellt, dass Aluminiumlegierungen mit einem Mg-Gehalt von bis zu 7 Gew.-% eine hohe Korrosionsbeständigkeit aufweisen. Ab einem Mg-Gehalt von 5 Gew.-% und mehr wurde jedoch eine interkristalline Korrosion beobachtet, die aber durch Glühen des beschichteten Stahlprodukts zur Homogenisierung der Beschichtung vermieden werden kann.

Des Weiteren wurde seitens der Erfinder erkannt, dass die Kombination der Legierungselemente Mn und Mg in dem Beschichtungsbad zu einer Erhöhung der mechanischen Eigenschaften der Beschichtung führt, wobei es beim Kaltumformen zu einer weiteren Festigkeitssteigerung kam.

Erfindungsgemäß soll das schmelzflüssige Beschichtungsbad 0,5 - 5 Gew.-% Fe als Pflichtelement enthalten. Eisen (Fe) im Beschichtungsbad (Schmelzbad) sättigt dieses gegenüber zu starker Fe-Auflösung aus dem in das Beschichtungsbad eingetauchten Stahlprodukt ab. Bei einem Fe-Gehalt von weniger als 0,5 Gew.-% ist dieser Effekt nicht ausreichend; bei einem Fe-Gehalt von mehr als 5 Gew.-% kann dagegen bereits eine erhöhte Schlackenbildung eintreten, welche die Beschichtungsqualität des Stahlproduktes negativ beeinflussen kann.

Die Legierungselemente Titan (Ti) und Zirkon (Zr) des erfindungsgemäßen Beschichtungsbades können einzeln oder in Kombination dazu beitragen, dass die durch Schmelztauchbeschichten erzeugte Korrosionsschutzbeschichtung des Stahlprodukts eine feinkristalline Struktur aufweist. Durch die feinkristalline Struktur werden schädliche Phasen in der Matrix der Korrosionsschutzbeschichtung fein verteilt und somit die Korrosionsbeständigkeit gesteigert. Dieser Effekt kann auch durch Zugabe von Kornfeinungsvorlegierungen erzielt werden. Seitens der Erfinder wurde erkannt, dass sich bei einem Ti-Gehalt oder Zr-Gehalt von jeweils weniger als 0,05 Gew.-% kein positiver Effekt hinsichtlich einer Steigerung der Korrosionsbeständigkeit feststellen lässt. Ebenso wenig lässt sich der beschriebene positive Effekt bei einem Ti-Gehalt oder Zr-Gehalt von jeweils mehr als 0,4 Gew.-% weiter steigern. Aus wirtschaftlichen Gesichtspunkten wird daher hier die obere Grenze für den Ti-Gehalt oder Zr-Gehalt des Beschichtungsbades gesetzt. Die Zugabe von Titan kann außer der Steigerung der Korrosionsbeständigkeit des Stahlproduktes zusätzlich die Beständigkeit der Korrosionsschutzbeschichtung gegenüber Meerwasser und Alkalien erhöhen.

Nach einer bevorzugten Ausgestaltung der Erfindung enthält das Beschichtungsbad bzw. die Korrosionsschutzbeschichtung zusätzlich eines oder mehrere der folgenden Elemente:

| | |
|---|---|
| Si | 0,1 - 15 Gew.-% |
| Ni | 0,05 - 2 Gew.-% |
| Sb | 0,05 - 0,4 Gew.-% |
| Cr | 0,05 - 0,4 Gew.-% |
| Co | max. 0,4 Gew.-% |
| Cu | max. 0,1 Gew.-% |
| Zn | max. 0,1 Gew.-%. |

Weitere Begleitelemente, zum Beispiel Bor, Kohlenstoff und/oder Stickstoff, können in Spuren in dem Beschichtungsbad bzw. der erfindungsgemäßen Korrosionsschutzbeschichtung ebenfalls optional vorhanden sein, wobei deren Einzelgehalte höchstens 0,05 Gew.-% betragen und deren Summe einen Maximalwert von 0,15 Gew.-% nicht überschreiten sollte.

Silizium (Si) im erfindungsgemäßen Beschichtungsbad hemmt ein übermäßiges Wachstum der Reaktionsschicht zwischen dem Stahlprodukt und der darauf aufgebrachten Korrosionsschutzbeschichtung und kann so das Umformvermögen des schmelztauchbeschichteten Stahlprodukts verbessern. Seitens der Erfinder wurde erkannt, dass sich dieser positive Effekt nicht mehr feststellen lässt, wenn das Beschichtungsbad bzw. die auf das Stahlprodukt aufgebrachte Korrosionsschutzbeschichtung einen Si-Gehalt von weniger als 0,1 Gew.-% aufweist. Enthält das Beschichtungsbad bzw. die auf das Stahlprodukt aufgebrachte Korrosionsschutzbeschichtung einen Si-Gehalt von mehr als 15 Gew.-%, so kann sich Silizium bereits merklich als Kristall ausscheiden, was die Eigenschaften der Korrosionsschutzbeschichtung negativ beeinflussen kann.

Nickel (Ni) im Beschichtungsbad bzw. als Legierungselement der auf das Stahlprodukt aufgebrachten Korrosionsschutzbeschichtung erhöht deren Festigkeit, insbesondere deren Warmfestigkeit, durch Bildung thermisch stabiler Ausscheidungen. Nickel kann dem erfindungsgemäßen Beschichtungsbad bis maximal 2 Gew.-% zugegeben werden.

Antimon (Sb) verbessert analog zu Titan die Beständigkeit des erfindungsgemäßen Stahlprodukts gegenüber Meerwasser und Alkalien. Dieser positive Effekt konnte von den Erfindern nicht beobachtet werden, wenn der Sb-Gehalt des Beschichtungsbades weniger als 0,05 Gew.-% betrug. Andererseits konnte dieser Effekt auch nicht merklich weiter verbessert wenn, wenn der Sb-Gehalt des Beschichtungsbades mehr als 0,4 Gew.- % betrug.

Chrom (Cr) als Legierungselement der Korrosionsschutzbeschichtung kann bei einem Gehalt von bis zu 0,4 Gew.-% eine Verringerung der Empfindlichkeit der Beschichtung gegen Spannungsrisskorrosion bewirken.

Kobalt (Co) als Legierungselement der Korrosionsschutzbeschichtung führt zu einer Erhöhung der Warmfestigkeit der Beschichtung. Kobalt hemmt das Kornwachstum bei höheren Temperaturen. Insbesondere verbessert Kobalt die Härte und Zähigkeit der erfindungsgemäßen Korrosionsschutzbeschichtung. Optional werden der Aluminiumlegierung des Beschichtungsbades bzw. der Korrosionsschutzbeschichtung bis zu 0,4 Gew.-% Kobalt zugegeben.

Kupfer (Cu) als Legierungselement der Korrosionsschutzbeschichtung führt ebenfalls zu einer Erhöhung der Warmfestigkeit der Beschichtung. Konventionellen Aluminiumlegierungen wird Kupfer bis zu einem Gehalt von 5 Gew.-% zugegeben. Jedoch führen Kupfergehalte im Bereich von 1 - 3 Gew.-% andererseits zu einer erhöhten Warmrissneigung. Optional werden der Aluminiumlegierung des Beschichtungsbades bzw. der Korrosionsschutzbeschichtung bis zu 0,1 Gew.-% Kupfer zugegeben.

Zink (Zn) als Legierungselement der Korrosionsschutzbeschichtung erhöht die Festigkeit und Härte der Beschichtung, insbesondere in Verbindung mit Magnesium. Bei hohen Zn-Gehalten steigt jedoch die Gefahr einer Spannungsrisskorrosion. Optional werden der Aluminiumlegierung des Beschichtungsbades bzw. der Korrosionsschutzbeschichtung bis zu 0,1 Gew.-% Zink zugegeben.

Eine weitere Ausgestaltung der Erfindung sieht vor, dass die Aluminiumlegierung des Beschichtungsbades bzw. die Korrosionsschutzbeschichtung des Stahlprodukts einen Mn-Gehalt im Bereich von 0,2 - 1,5 Gew.-% aufweist. Versuche der Erfinder haben gezeigt, dass mit einem solchen Mn-Gehalt eine besonders hohe Korrosionsbeständigkeit, insbesondere eine hohe Beständigkeit gegen Säuren und alkalische Medien erzielt werden kann, und dass dadurch die Schlackenbildung, welche die Beschichtungsqualität negativ beeinflussen kann, deutlich reduziert ist. Dies ist insbesondere dann der Fall, wenn nach einer weiteren bevorzugten Ausgestaltung der Erfindung die Aluminiumlegierung einen Fe-Gehalt im Bereich von größer 1,5 bis 5 Gew.-%, besonders bevorzugt im Bereich von größer 3 bis 5 Gew.-% aufweist.

Eine alternative Ausgestaltung der Erfindung sieht vor, dass die Aluminiumlegierung des Beschichtungsbades bzw. die Korrosionsschutzbeschichtung des erfindungsgemäßen Stahlprodukts einen Mn-Gehalt im Bereich von 1,5 - 2 Gew.-% aufweist.

Versuche seitens der Erfinder haben gezeigt, dass mit einem solchen Mn-Gehalt wiederum eine besonders hohe Korrosionsbeständigkeit, insbesondere eine hohe Beständigkeit gegen Säuren und alkalische Medien erzielt werden kann, und dass dadurch ebenfalls die Schlackenbildung, welche die Beschichtungsqualität negativ beeinflussen kann, deutlich reduziert ist. Der Fe-Gehalt der Aluminiumlegierung wird dabei vorzugsweise so gewählt, dass er im Bereich von größer 1,5 bis 5 Gew.-%, besonders bevorzugt im Bereich von größer 1,5 bis 3 Gew.-% liegt. Diese Grenzen führen jeweils zu einer reduzierten Schlackenbildung.

Eine weitere vorteilhafte Ausgestaltung der Erfindung ist dadurch gekennzeichnet, dass die Aluminiumlegierung des Beschichtungsbades bzw. die Korrosionsschutzbeschichtung des erfindungsgemäßen Stahlprodukts neben Mn mit dem angegebenen Mn-Gehalt einen Mg-Gehalt im Bereich von 0,2 bis kleiner 0,6 Gew.-% aufweist. Auch diese Grenzen führen zu einer reduzierten Schlackenbildung.

Zur Erzielung eines optimalen Beschichtungsergebnisses ist von Vorteil, wenn gemäß einer bevorzugten Ausgestaltung des erfindungsgemäßen Verfahren das Beschichtungsbad mit einer Beschichtungsbadtemperatur im Bereich von 650 bis 750°C, vorzugsweise im Bereich von 680 bis 750°C betrieben wird. Bei Beschichtungsbadtemperaturen darüber und darunter wurde mitunter kein optimales Beschichtungsergebnis erzielt, da dann zum Beispiel die Reaktionsgeschwindigkeit zwischen dem Stahlprodukt und dem schmelzflüssigen Beschichtungsbad zu gering war oder eine verstärkte Schlackenbildung auftrat.

Die Oberflächenaktivierung des Stahlprodukts, um vor dem Eintauchen in das Beschichtungsbad passive Oxide von der Stahloberfläche zu entfernen, so dass diese weitestgehend aus metallischem Eisen besteht, kann auf verschiedene Weise durchgeführt werden. Eine zuverlässige Verfahrensweise bzw. Ausgestaltung des erfindungsgemäßen Verfahrens ist diesbezüglich dadurch gekennzeichnet, dass die Oberfläche des Stahlprodukts durch Beizen, beispielsweise mit Salz- oder Schwefelsäure, aktiviert wird. Anschließendes Spülen, Fluxen und Trocknen vervollständigt diese Aktivierung und soll eine Rückpassivierung durch den Umgebungssauerstoff verhindern. Das so behandelte Stahlprodukt wird dann auf eine Temperatur, die der Temperatur des Beschichtungsbades entspricht oder maximal 50°C oberhalb der Temperatur des Beschichtungsbades liegt, erwärmt. Diese Prozessabfolge empfiehlt sich besonders für warmgewalztes Ausgangsmaterial.

Eine andere zuverlässige Verfahrensweise bzw. Ausgestaltung des erfindungsgemäßen Verfahrens bezüglich der Oberflächenaktivierung des Stahlprodukts ist dadurch gekennzeichnet, dass die Oberfläche des Stahlprodukts durch Beizen, beispielsweise mit Salz- oder Schwefelsäure, Spülen und Glühen aktiviert wird, wobei das Glühen in einer Wasserstoff-Stickstoffatmosphäre bei einer Haltetemperatur im Bereich von 500 bis 900°C durchgeführt wird, und dass das so behandelte Stahlprodukt auf eine Temperatur, die der Temperatur des Beschichtungsbades entspricht oder maximal 50°C oberhalb der Temperatur des Beschichtungsbades liegt, erwärmt oder abgekühlt wird. Um die Oberflächenaktivierung zu vervollständigen bzw. eine Rückpassivierung der Oberfläche zu unterbinden, sollte der H₂-Anteil größer/gleich 1 Vol.-% H₂ betragen. Bei einem H₂-Anteil größer 50 Vol.-% wird hingegen kein zusätzlicher positiver Effekt mehr gesehen, weswegen solch hohe H₂-Anteile aufgrund Unwirtschaftlichkeit zu vermeiden sind. Aus dem gleichen Grund soll der Taupunkt der H₂-N₂-Atmosphäre im Bereich von - 60°C bis 0°C liegen. Ein tieferer Taupunkt als -60°C ist großtechnisch schwierig zu realisieren und würde weiterhin keinen positiven Effekt bringen. Bei einem Taupunkt größer als 0°C könnte hingegen eine Rückoxidation der Stahloberfläche nicht ausgeschlossen werden, weswegen solch hohe Taupunkte zu vermeiden sind. Auch diese Variante empfiehlt sich für warmgewalztes Ausgangsmaterial.

Nach einer weiteren Variante des erfindungsgemäßen Verfahrens wird die Oberfläche des Stahlprodukts durch Glühen aktiviert, wobei das Stahlprodukt in einer Wasserstoff-Stickstoffatmosphäre auf eine Haltetemperatur im Bereich von 600 bis 1100°C aufgeheizt wird. Um eventuell vorhandene Oberflächenoxide zu reduzieren sowie deren Bildung während der Glühung zu vermeiden, soll der H₂-Anteil größer/gleich 1 Vol.-% H₂ betragen. Bei einem H₂-Anteil größer 50 Vol.-% wird hingegen kein zusätzlicher positiver Effekt mehr gesehen, weswegen solch hohe H₂-Anteile aufgrund Unwirtschaftlichkeit zu vermeiden sind. Aus dem gleichen Grund soll der Taupunkt der H₂-N₂-Atmosphäre im Bereich von -60°C bis 0°C liegen. Ein tieferer Taupunkt als -60°C ist großtechnisch schwierig zu realisieren und würde weiterhin keinen positiven Effekt bringen. Bei einem Taupunkt größer als 0°C könnte hingegen eine Rückoxidation der Stahloberfläche nicht ausgeschlossen werden, weswegen solch hohe Taupunkte zu vermeiden sind. Das so behandelte Stahlprodukt wird dann auf eine Temperatur, die der Temperatur des Beschichtungsbades entspricht oder maximal 50°C oberhalb der Temperatur des Beschichtungsbades liegt, erwärmt oder abgekühlt. Diese Variante empfiehlt sich besonders bei kaltgewalztem Ausgangsmaterial, da in diesem Fall das Gefüge des Stahls bei Haltetemperatur rekristallisieren kann. Eine Haltetemperatur kleiner 600°C ist zu vermeiden, da ansonsten eine nicht vollständige Rekristallisation resultieren kann. Bei einer Haltetemperatur größer 1100°C droht hingegen Grobkornbildung. Die Verweildauer auf Haltetemperatur soll dabei mindestens 30 Sekunden und maximal 90 Sekunden betragen. Ist die Verweildauer kleiner 30 Sekunden, so kann eine nicht vollständige Rekristallisation resultieren. Bei einer Haltedauer (Verweildauer) größer 90 Sekunden droht Grobkornbildung.

Um bei den oben genannten Varianten der Oberflächenaktivierung des Stahlprodukts, welche ein Glühen der Oberfläche des Stahlprodukts beinhalten, eine Rückpassivierung der Stahloberfläche nach dem Glühen zu vermeiden, sieht eine weitere Ausgestaltung des erfindungsgemäßen Verfahrens vor, dass das geglühte Stahlprodukt durch einen Rüssel, in welchem eine neutrale oder reduktive Schutzgasatmosphäre vorherrscht, geschützt in das Beschichtungsbad hindurch eingeleitet wird. Als Schutzgas wird dabei vorzugsweise Stickstoff oder ein Stickstoff-Wasserstoff-Gemisch verwendet, und dies bei einem Taupunkt im Bereich von -60°C bis 0°C aus den oben genannten Gründen.

Sollen legierte Stahlprodukte unter Nutzung der oben genannten Glühgasaktivierung durch Schmelztauchen mit einer erfindungsgemäßen Aluminiumlegierung beschichtet werden, kann es zweckmäßig sein, die Glühgas-Metall-Reaktion während des Glühens so zu betreiben, dass eine externe Oxidation der sauerstoffaffinen Legierungselemente des Stahls (wie z.B. Mn, Al, Cr, B, Si, ...) verhindert wird. Mit "legiert" soll hier gemeint sein, dass der Anteil von mindestens einem Legierungselement aus der Gruppe Mn, Al, Si und Cr größer/gleich 0,2 Gew.-% beträgt, wobei der Mn-Anteil maximal 30,0 Gew.-%, der Anteil von Aluminium oder Silizium maximal 10,0 Gew.-% und der Cr-Anteil maximal 5,0 Gew.-% beträgt. In solchen Fällen würde das Glühen des Stahlprodukts gemäß einer weiteren Ausgestaltung des erfindungsgemäßen Verfahrens vorzugsweise so durchgeführt, dass zusätzlich ein Voroxidieren des Stahlprodukts, ein Oberflächennitrieren des Stahlprodukts, ein geregeltes Taupunktführen oder Kombinationen aus diesen Maßnahmen durchgeführt werden. Mit "Voroxidation" wird eine Oxidations-Reduktions-Behandlung der Stahloberfläche bezeichnet. Hierbei wird beispielsweise in einem ersten Schritt, während der Aufheizphase auf Haltetemperatur und zu Beginn der Verweilzeit auf Haltetemperatur die Stahloberfläche für mindestens 1 Sekunde bis maximal 15 Sekunden einer mindestens 0,1 Vol.-% bis maximal 3,0 Vol.-% Sauerstoff enthaltenen Atmosphäre ausgesetzt, um gezielt FeO zu bilden. Sind Voroxidationszeit und der Sauerstoffanteil zu gering gewählt, kann diese FeO-Bildung nicht ausreichend erfolgen. Sind Voroxidationszeit und der Sauerstoffanteil zu hoch eingestellt, wird zuviel FeO gebildet, so dass dieses nicht mehr vollständig während der Verweilzeit in der Wasserstoff-Stickstoff-Atmosphäre auf Haltetemperatur rückreduziert werden kann. Bei dem "Oberflächennitrieren" wird während der Aufheizphase auf Haltetemperatur und zu Beginn der Verweilzeit auf Haltetemperatur die Stahloberfläche für mindestens 1 Sekunde bis maximal 15 Sekunden einer mindestens 3,0 Vol.-% bis maximal 10,0 Vol.-% NH₃ enthaltenen Atmosphäre ausgesetzt, um gezielt oberflächennah im Stahl Nitride zu bilden, welche Oxidationspfade für die sauerstoffaffinen Legierungselement blockieren. Sind Nitrierzeit und NH₃-Anteil zu gering gewählt, kann diese Nitrit-Bildung zu gering ausfallen. Sind Nitrierzeit und NH₃-Anteil zu hoch eingestellt, kann kein zusätzlicher positiver Effekt mehr beobachtet werden. Mit geregelter Taupunktführung ist gemeint, dass der Taupunkt innerhalb der genannten bzw. bevorzugten Grenzen innerhalb verschiedener Ofenzonen gezielt auf die jeweilige Stahllegierung eingestellt wird, um die selektive Oxidation der Legierungselemente gemäß dem Wagner-Kriterium intern statt extern ablaufen zu lassen.

Eine weitere vorteilhafte Ausgestaltung des erfindungsgemäßen Verfahrens sieht vor, dass Glühen des Stahlprodukts so durchgeführt wird, dass dabei eine Entkohlung, insbesondere eine Randentkohlung des Stahlprodukts erzielt wird. Bei einer Randentkohlung wird durch gezielte Glühgas-Metallreaktion dem Stahlprodukt Kohlenstoff oberflächennah durch Reaktion mit gasförmigem H₂O entzogen. Hierzu wird der Taupunkt der Atmosphäre auf einen Bereich von -20°C bis 0°C eingestellt, damit ausreichend H₂O in der Glühgasatmosphäre enthalten ist. Eine solche Randentkohlung empfiehlt sich besonders, wenn der Kohlenstoff-Anteil der Stahllegierung im Bereich von 0,1 Gew.-% bis 0,4 Gew.-% liegt. Hierdurch wird die Umformbarkeit des Stahlsubstrats verbessert.

In weiterer Ausgestaltung des erfindungsgemäßen Verfahrens kann sich an den Schritt des Beschichtens des oberflächenaktivierten Stahlproduktes unter Verwendung eines eine erfindungsgemäße Aluminiumlegierung enthaltenden Beschichtungsbades eine thermische, chemische und/oder mechanische Nachbehandlung anschließen. So sieht eine weitere vorteilhafte Ausgestaltung des erfindungsgemäßen Verfahrens vor, dass die Oberfläche des schmelztauchbeschichteten Stahlprodukts dressiert wird. Durch ein Dressieren der Oberfläche kann eine beliebige Rauheit oder Oberflächenstruktur auf dem erfindungsgemäß beschichteten Stahlprodukt erzeugt werden.

Eine weitere vorteilhafte Ausgestaltung des erfindungsgemäßen Verfahrens ist dadurch gekennzeichnet, dass die Oberfläche des schmelztauchbeschichteten Stahlprodukts eloxiert wird. Hierdurch kann die Verschleißbeständigkeit der erfindungsgemäßen Korrosionsschutzbeschichtung gesteigert werden, wobei zugleich auch eine dekorative Färbung der Beschichtung erfolgen kann. Das Eloxieren führt zu einer Erhöhung der Abriebfestigkeit, die deutlich über der eines konventionellen Edelstahls vom Typ 1.4301 liegt.

Nachfolgend wird die Erfindung anhand von Ausführungsbeispielen näher erläutert.

Das Beschichten eines Stahlprodukts, typischerweise eines Stahlflachprodukts, mit einem erfindungsgemäßen Aluminium-Überzug erfolgt durch kurzfristiges Eintauchen des Stahlprodukts in ein schmelzflüssiges Beschichtungsbad, weswegen hier auch von Feueraluminieren gesprochen werden kann. Um eine gute Benetzung und Haftung des Beschichtungsmaterials auf dem Stahlsubstrat zu erzielen, wird eine Vorbehandlung zur Aktivierung der Stahloberfläche durchgeführt. Diese Vorbehandlung und die Feueraluminierung erfolgen vorzugsweise in Reihe sowie in einer kontinuierlichen Prozessabfolge. Diese Prozessabfolge umfasst die Schritte:
a) Bereitstellen des Stahlprodukts, vorzugsweise Stahlflachprodukts in warm- oder kaltgewalztem Zustand
b) Reinigung der Oberfläche des Stahlprodukts (optional)
c) Aktivieren der Oberfläche des Stahlprodukts
d) Feueraluminieren, d.h. Schmelztauchbeschichten in einer erfindungsgemäßen Beschichtungsbadzusammensetzung auf Basis von Aluminium
e) Thermische, chemische oder mechanische Nachbehandlung (jeweils optional)

Durch die Oberflächenaktivierung werden passive Oxide von der Oberfläche des Stahlprodukts entfernt, so dass diese nach der Aktivierung weitestgehend aus metallischem Eisen besteht. Dies kann auf verschiedene Weise erzielt werden, und zwar durch
c1) chemische Oberflächenaktivierung umfassend Beizen, Spülen, Fluxen und Trocknen der Stahloberfläche und Temperieren des Stahlprodukts auf Bandeintauchtemperatur bevor dieses in das Beschichtungsbad eintaucht. Diese Oberflächenaktivierung bzw. Prozessabfolge empfiehlt sich besonders für warmgewalzten Stahl als Ausgangsmaterial.
c2) kombinierte chemische/ Glühgasaktivierung umfassend Beizen, Spülen, Glühen in einer Wasserstoff-Stickstoffatmosphäre (mit einem Taupunkt -60°C bis 0°C) bei einer Haltetemperatur im Bereich von 500°C bis 900°C und Abkühlen auf Badeintauchtemperatur. Optional kann dabei ein Überalterungsprozess vor dem Eintauchen des oberflächenaktivierten Stahlprodukts in das Beschichtungsbad durchgeführt werden. Auch diese Oberflächenaktivierung bzw. Prozessabfolge empfiehlt sich für warmgewalzten Stahl als Ausgangsmaterial.
c3) Glühgasaktivierung umfassend Aufheizen auf eine Haltetemperatur im Bereich von 600°C bis 1100°C in Wasserstoff-Stickstoffatmosphäre (mit einem Taupunkt - 60°C bis 0°C) und Abkühlen auf Badeintauchtemperatur. Optional kann dabei ebenfalls ein Überalterungsprozess vor dem Eintauchen des oberflächenaktivierten Stahlprodukts in das Beschichtungsbad durchgeführt werden. Diese Variante der Oberflächenaktivierung bzw. Prozessabfolge empfiehlt sich besonders bei kaltgewalztem Stahl als Ausgangsmaterial, da dessen Gefüge bei der Haltetemperatur rekristallisieren kann.

Unabhängig von der Wahl der Prozessschrittabfolge c1), c2) oder c3) wird das schmelzflüssige Beschichtungsbad mit einer Beschichtungsbadtemperatur im Bereich von 650°C bis 750°C, vorzugsweise im Bereich von 680°C bis 750°C betrieben. Das zu beschichtende, oberflächenaktivierte Stahlprodukt wird vorzugsweise auf eine Badeintauchtemperatur im Bereich von 650°C bis 800°C abgekühlt.

Soll ein Stahlprodukt aus legiertem Stahl unter Nutzung einer der Prozessschrittabfolgen c2) oder c3) erfindungsgemäß feuerlaminiert werden, kann es erforderlich sein, die Glühgas-Metall-Reaktion während des Glühens so zu betreiben, dass eine externe Oxidation der sauerstoffaffinen Legierungselemente (wie Mn, Al, Cr, B, Si, ...) verhindert wird. Hierzu würde die Glühgas-Metall-Reaktion zusätzlich z.B. eine Voroxidation, eine Oberflächennitrierung, eine geregelte Taupunktführung oder Kombinationen dieser zusätzlichen Maßnahmen umfassen. Ebenfalls liegt es im Rahmen der Erfindung, parallel zu der Oberflächenaktivierung eine Randentkohlung durchzuführen, um die Umformbarkeit des Stahlprodukts zu verbessern.

Um bei der Prozessschrittabfolge c2) oder c3) eine Rückpassivierung der Stahloberfläche nach dem Glühen zu verhindern, erfolgt die Überleitung des auf Badeintauchtemperatur abgekühlten Stahlprodukts in das Beschichtungsbad über einen Rüssel, in welchem eine kontrollierte, gegenüber dem Stahlsubstrat neutrale oder reduktive, Stickstoff- oder Stickstoff-Wasserstoff-Schutzgasatmosphäre vorherrscht.

Durch ein optionales Dressieren der Oberfläche des erfindungsgemäß beschichteten Stahlprodukts kann eine gewünschte Rauheit oder Oberflächenstruktur aufgebracht werden. In einem nachgeschalteten, optionalen Eloxierprozess kann die Verschleißbeständigkeit der erfindungsgemäßen Beschichtung des Stahlprodukts gesteigert werden. Das Eloxieren bewirkt eine Erhöhung der Abriebbeständigkeit, die etwa um den Faktor 3 über derjenigen eines herkömmlichen Edelstahls (1.4301) liegt.

Der Überzug eines Stahlprodukts, das erfindungsgemäß mittels eines Beschichtungsbades und einer der Prozessschrittfolgen wie oben beschrieben feueraluminiert wurde, enthält neben Aluminium und unvermeidbaren Verunreinigungen folgende Elemente:

| | | |
|---|---|---|
| | Mn | 0,2 - 2 Gew.-% |
| und/oder | Mg | 0,2 - 7 Gew.-% |
| | Fe | 0,5 - 5 Gew.-% als Pflichtelement |
| | Ti | 0,05 - 0,4 Gew.-% |
| und/oder | Zr | 0,05 - 0,4 Gew.-%. |

In Tabelle 1 sind mehrere Ausführungsbeispiele für die chemische Zusammensetzung eines erfindungsgemäßen metallischen Beschichtungsbades (Schmelzbades) angegeben. Die in Tabelle 1 angegebenen Schmelzen des Typs V1 und V3 weisen eine besonders hohe Korrosionsbeständigkeit auch gegen Säuren und alkalische Medien auf. Die Schmelze des Typs V2 besitzt eine erhöhte Beständigkeit gegen Seewasser und Alkalien.

Ein mit einer erfindungsgemäßen Korrosionsschutzbeschichtung versehenes Stahlflachprodukt ist für alle gängigen Fügeverfahren wie Löten, Schweißen, Kleben, etc. geeignet und kann ein- oder mehrstufig sowohl kalt- als auch warmumgeformt zu einem Bauteil verarbeitet werden. Ein solches Stahlflachprodukt oder Bauteil eignet sich für den allgemeinen Maschinenbau, (Luft-) Fahrzeug- und Schiffbau, Haushaltsgerätebau, das Bauwesen, insbesondere für Außenfassaden, dekorative Elemente des täglichen Gebrauchs, wie z.B. Gehäuse für Mobiltelefone und Notebooks, sowie Untertagegeräte. Besonders vorteilhaft ist der Verwendung von Stahlflachprodukten mit der erfindungsgemäßen Korrosionsschutzbeschichtung bzw. von aus solchen Stahlflachprodukten hergestellten Bauteilen im Bereich der chemischen Industrie sowie der Lebensmittelindustrie, z.B. statisch belastete Anlagenkomponenten und Gegenstände wie Silobehälter, Isolatoren, Getränkedosen etc.. Bei dem letztgenannten Anwendungsfall ermöglicht die erfindungsgemäße Korrosionsschutzbeschichtung auf Aluminiumbasis die in der Lebensmittelindustrie nach "EU-Verordnung 1935/2004" sowie den "EU-Guidelines on meals, alloys used as food contact materials (09.03.2001)" vorgeschriebenen rostfreien Stähle durch niedrig legierte Stähle zu ersetzen.

## Patentansprüche

1. Stahlprodukt, insbesondere Stahlflachprodukt, mit einer metallischen Korrosionsschutzbeschichtung aus einer Aluminiumlegierung, wobei die Aluminiumlegierung neben Al und unvermeidbaren Verunreinigungen aus folgenden Elementen besteht:
| | | |
|---|---|---|
| | Mn | 0,2 - 2 Gew.-% |
| und/oder | Mg | 0,2 - 7 Gew.-% |
| | Fe | 0,5 - 5 Gew.-% als Pflichtelement |
| | Ti | 0,05 - 0,4 Gew.-% |
| und/oder | Zr | 0,05 - 0,4 Gew.-% |
und optional einem oder mehreren der folgenden Elemente:
| | |
|---|---|
| Si | 0,1 - 15 Gew.-% |
| Ni | 0,05 - 2 Gew.-% |
| Sb | 0,05 - 0,4 Gew.-% |
| Cr | 0,05 - 0,4 Gew.-% |
| Co | max. 0,4 Gew.-% |
| Cu | max. 0,1 Gew.-% |
| Zn | max. 0,1 Gew.-% |
sowie optional weiteren Begleitelementen, deren Einzelgehalt höchstens 0,05 Gew.-% und deren Summe höchstens 0,15 Gew.-% beträgt.

2. Stahlprodukt nach Anspruch 1, **dadurch gekennzeichnet, dass** die Aluminiumlegierung einen Mn-Gehalt im Bereich von 0,2 - 1,5 Gew.-% aufweist.

3. Stahlprodukt nach Anspruch 1, **dadurch gekennzeichnet, dass** die Aluminiumlegierung einen Mn-Gehalt im Bereich von größer 1,5 - 2 Gew.-% aufweist.

4. Stahlprodukt nach einem der Ansprüche 1 bis 3, **dadurch gekennzeichnet, dass** die Aluminiumlegierung einen Fe-Gehalt im Bereich von größer 1,5 - 5 Gew.-% aufweist.

5. Stahlprodukt nach Anspruch 2, **dadurch gekennzeichnet, dass** die Aluminiumlegierung einen Fe-Gehalt im Bereich von größer 3 - 5 Gew.-% aufweist.

6. Stahlprodukt nach Anspruch 3, **dadurch gekennzeichnet, dass** die Aluminiumlegierung einen Fe-Gehalt im Bereich von größer 1,5 - 3 Gew.-% aufweist.

7. Stahlprodukt nach einem der Ansprüche 1 bis 6, **dadurch gekennzeichnet, dass** die Aluminiumlegierung neben Mn mit dem angegebenen Mn-Gehalt einen Mg-Gehalt im Bereich von 0,2 bis kleiner 0,6 Gew.-% aufweist.

8. Verfahren zur Herstellung eines Stahlprodukts, insbesondere Stahlflachprodukts, mit einer metallischen Korrosionsschutzbeschichtung aus einer Aluminiumlegierung, **gekennzeichnet durch** folgende Schritte:
- Bereitstellen eines Stahlprodukts, insbesondere Stahlflachprodukts in warm- oder kaltgewalztem Zustand,
- Aktivieren der Oberfläche des Stahlprodukts, so dass passive Oxide von der Oberfläche des Stahlprodukts entfernt werden, und
- Beschichten des oberflächenaktivierten Stahlprodukts durch Eintauchen in ein schmelzflüssiges Beschichtungsbad, welches eine Aluminiumlegierung enthält, die gemäß einem der Ansprüche 1 bis 7 zusammengesetzt ist.

9. Verfahren nach Anspruch 8, **dadurch gekennzeichnet, dass** das Beschichtungsbad mit einer Beschichtungsbadtemperatur im Bereich von 650 - 750°C betrieben wird.

10. Verfahren nach Anspruch 8 oder 9, **dadurch gekennzeichnet, dass** die Oberfläche des Stahlprodukts durch Beizen, Spülen, Fluxen und Trocknen aktiviert wird und dass das so behandelte Stahlprodukt auf eine Temperatur, die der Temperatur des Beschichtungsbades entspricht oder maximal 50°C oberhalb der Temperatur des Beschichtungsbades liegt, erwärmt wird.

11. Verfahren nach Anspruch 8 oder 9, **dadurch gekennzeichnet, dass** die Oberfläche des Stahlprodukts durch Beizen, Spülen und Glühen aktiviert wird, wobei das Glühen in einer Wasserstoff-Stickstoffatmosphäre bei einer Haltetemperatur im Bereich von 500 - 900°C durchgeführt wird, und dass das so behandelte Stahlprodukt auf eine Temperatur, die der Temperatur des Beschichtungsbades entspricht oder maximal 50°C oberhalb der Temperatur des Beschichtungsbades liegt, erwärmt oder abgekühlt wird.

12. Verfahren nach Anspruch 8 oder 9, **dadurch gekennzeichnet, dass** die Oberfläche des Stahlprodukts durch Glühen aktiviert wird, wobei das Stahlprodukt in einer Wasserstoff-Stickstoffatmosphäre auf eine Haltetemperatur im Bereich von 600 - 1100°C aufgeheizt wird, und dass das so behandelte Stahlprodukt auf eine Temperatur, die der Temperatur des Beschichtungsbades entspricht oder maximal 50°C oberhalb der Temperatur des Beschichtungsbades liegt, erwärmt oder abgekühlt wird.

13. Verfahren nach Anspruch 11 oder 12, **dadurch gekennzeichnet, dass** das geglühte Stahlprodukt durch einen Rüssel, in welchem eine neutrale oder reduktive Schutzgasatmosphäre vorherrscht, hindurch geschützt in das Beschichtungsbad eingeleitet wird.

14. Verfahren nach einem der Ansprüche 11 bis 13, **dadurch gekennzeichnet, dass** Glühen des Stahlprodukts so durchgeführt wird, dass zusätzlich ein Voroxidieren des Stahlprodukts, ein Oberflächennitrieren des Stahlprodukts, ein geregeltes Taupunktführen oder Kombinationen daraus durchgeführt werden.

15. Verfahren nach einem der Ansprüche 11 bis 13, **dadurch gekennzeichnet, dass** Glühen des Stahlprodukts so durchgeführt wird, dass dabei eine Entkohlung des Stahlprodukts erzielt wird.

16. Verfahren nach einem der Ansprüche 8 bis 15, **dadurch gekennzeichnet, dass** die Oberfläche des schmelztauchbeschichteten Stahlprodukts dressiert wird.

17. Verfahren nach einem der Ansprüche 8 bis 16, **dadurch gekennzeichnet, dass** die Oberfläche des schmelztauchbeschichteten Stahlprodukts eloxiert wird.

## Claims

1. Steel product, more particularly flat steel product, having a metallic anticorrosion coating of an aluminum alloy, the aluminum alloy consisting of, further to Al and unavoidable impurities, the following elements:
| | | |
|---|---|---|
| | Mn | 0.2-2 wt% |
| and/or | Mg | 0.2-7 wt% |
| | Fe | 0.5-5 wt% as obligatory element |
| | Ti | 0.05-0.4 wt% |
| and/or | Zr | 0.05-0.4 wt% |
and optionally one or more of the following elements:
| | |
|---|---|
| Si | 0.1-15 wt% |
| Ni | 0.05-2 wt% |
| Sb | 0.05-0.4 wt% |
| Cr | 0.05-0.4 wt% |
| Co | max. 0.4 wt% |
| Cu | max. 0.1 wt% |
| Zn | max. 0.1 wt% |
and optionally further accompanying elements whose individual amounts are not more than 0.05 wt% and whose total is not more than 0.15 wt%.

2. Steel product according to Claim 1, **characterized in that** the aluminum alloy has an Mn content in the range of 0.2-1.5 wt%.

3. Steel product according to Claim 1, **characterized in that** the aluminum alloy has an Mn content in the range of greater than 1.5-2 wt%.

4. Steel product according to any of Claims 1 to 3, **characterized in that** the aluminum alloy has an Fe content in the range of greater than 1.5-5 wt%.

5. Steel product according to Claim 2, **characterized in that** the aluminum alloy has an Fe content in the range of greater than 3-5 wt%.

6. Steel product according to Claim 3, **characterized in that** the aluminum alloy has an Fe content in the range of greater than 1.5-3 wt%.

7. Steel product according to any of Claims 1 to 6, **characterized in that** the aluminum alloy, in addition to Mn with the stated Mn content, has an Mg content in the range from 0.2 to less than 0.6 wt%.

8. Method for producing a steel product, more particularly flat steel product, having a metallic anticorrosion coating of an aluminum alloy, **characterized by** the following steps:
- providing a steel product, more particularly flat steel product, in a hot-rolled or cold-rolled state,
- activating the surface of the steel product to remove passive oxides from the surface of the steel product, and
- coating the surface-activated steel product by immersion in a liquid-melt coating bath which contains an aluminum alloy with a composition according to any of Claims 1 to 7.

9. Method according to Claim 8, **characterized in that** the coating bath is operated with a coating bath temperature in the range of 650-750°C.

10. Method according to Claim 8 or 9, **characterized in that** the surface of the steel product is activated by pickling, rinsing, fluxing, and drying and **in that** the steel product thus treated is heated to a temperature which corresponds to the temperature of the coating bath or is at most 50°C above the temperature of the coating bath.

11. Method according to Claim 8 or 9, **characterized in that** the surface of the steel product is activated by pickling, rinsing, and annealing, the annealing being carried out in a hydrogen-nitrogen atmosphere at a holding temperature in the range of 500-900°C, and **in that** the steel product thus treated is heated or cooled to a temperature which corresponds to the temperature of the coating bath or is at most 50°C above the temperature of the coating bath.

12. Method according to Claim 8 or 9, **characterized in that** the surface of the steel product is activated by annealing, the steel product being heated in a hydrogen-nitrogen atmosphere to a holding temperature in the range of 600-1100°C, and **in that** the steel product thus treated is heated or cooled to a temperature which corresponds to the temperature of the coating bath or is at most 50°C above the temperature of the coating bath.

13. Method according to Claim 11 or 12, **characterized in that** the annealed steel product is introduced into the coating bath in protected form through a transfer tube in which there is a neutral or reductive inert-gas atmosphere.

14. Method according to any of Claims 11 to 13, **characterized in that** annealing of the steel product is carried out such that additionally preoxidizing of the steel product, surface nitriding of the steel product, controlled dew point working, or combinations thereof are carried out.

15. Method according to any of Claims 11 to 13, **characterized in that** annealing of the steel product is carried out such that the steel product is decarburized.

16. Method according to any of Claims 8 to 15, **characterized in that** the surface of the hot dip-coated steel product is dressed.

17. Method according to any of claims 8 to 16, **characterized in that** the surface of the hot dip-coated steel products is anodized.

## Revendications

1. Produit en acier, notamment produit plat en acier, comprenant un revêtement anticorrosion métallique en un alliage d'aluminium, l'alliage d'aluminium étant constitué par les éléments suivants en plus d'Al et des impuretés inévitables :
Mn 0,2 à 2 % en poids
et/ou Mg 0,2 à 7 % en poids,
Fe 0,5 à 5 % en poids en tant qu'élément obligatoire,
Ti 0,05 à 0,4 % en poids
et/ou Zr 0,05 à 0,4 % en poids,
et éventuellement un ou plusieurs des éléments suivants :
Si 0,1 à 15 % en poids,
Ni 0,05 à 2 % en poids,
Sb 0,05 à 0,4 % en poids,
Cr 0,05 à 0,4 % en poids,
Co au plus 0,4 % en poids,
Cu au plus 0,1 % en poids,
Zn au plus 0,1 % en poids,
ainsi qu'éventuellement d'autres éléments accompagnateurs, dont la teneur individuelle est d'au plus 0,05 % en poids et dont la somme est d'au plus 0,15 % en poids.

2. Produit en acier selon la revendication 1, **caractérisé en ce que** l'alliage d'aluminium présente une teneur en Mn dans la plage allant de 0,2 à 1,5 % en poids.

3. Produit en acier selon la revendication 1, **caractérisé en ce que** l'alliage d'aluminium présente une teneur en Mn dans la plage allant de plus de 1,5 à 2 % en poids.

4. Produit en acier selon l'une quelconque des revendications 1 à 3, **caractérisé en ce que** l'alliage d'aluminium présente une teneur en Fe dans la plage allant de 1,5 à 5 % en poids.

5. Produit en acier selon la revendication 2, **caractérisé en ce que** l'alliage d'aluminium présente une teneur en Fe dans la plage allant de plus de 3 à 5 % en poids.

6. Produit en acier selon la revendication 3, **caractérisé en ce que** l'alliage d'aluminium présente une teneur en Fe dans la plage allant de plus de 1,5 à 3 % en poids.

7. Produit en acier selon l'une quelconque des revendications 1 à 6, **caractérisé en ce que** l'alliage d'aluminium présente une teneur en Mg dans la plage allant de 0,2 à moins de 0,6 % en poids en plus du Mn en la teneur en Mn indiquée.

8. Procédé de fabrication d'un produit en acier, notamment d'un produit plat en acier, comprenant un revêtement anticorrosion métallique en un alliage d'aluminium, **caractérisé par** les étapes suivantes :
- la préparation d'un produit en acier, notamment d'un produit plat en acier à l'état cylindré à chaud ou à froid,
- l'activation de la surface du produit en acier, de telle sorte que des oxydes passifs soient éliminés de la surface du produit en acier, et
- le revêtement du produit en acier à surface activée par immersion dans un bain de revêtement liquide à l'état fondu, qui contient un alliage d'aluminium dont la composition est selon l'une quelconque des revendications 1 à 7.

9. Procédé selon la revendication 8, **caractérisé en ce que** le bain de revêtement est exploité avec une température de bain de revêtement dans la plage allant de 650 à 750 °C.

10. Procédé selon la revendication 8 ou 9, **caractérisé en ce que** la surface du produit en acier est activée par décapage, rinçage, fluxage et séchage, et **en ce que** le produit en acier ainsi traité est porté à une température qui correspond à la température du bain de revêtement ou est au plus 50 °C au-dessus de la température du bain de revêtement.

11. Procédé selon la revendication 8 ou 9, **caractérisé en ce que** la surface du produit en acier est activée par décapage, rinçage et recuit, le recuit étant réalisé dans une atmosphère d'hydrogène et d'azote à une température de maintien dans la plage allant de 500 à 900 °C, et **en ce que** le produit en acier ainsi traité est porté ou refroidi à une température qui correspond à la température du bain de revêtement ou est au plus 50 °C au-dessus de la température du bain de revêtement.

12. Procédé selon la revendication 8 ou 9, **caractérisé en ce que** la surface du produit en acier est activée par recuit, le produit en acier étant porté à une température de maintien dans la plage allant de 600 à 1 100 °C dans une atmosphère d'hydrogène et d'azote, et **en ce que** le produit en acier ainsi traité est porté ou refroidi à une température qui correspond à la température du bain de revêtement ou est au plus 50 °C au-dessus de la température du bain de revêtement.

13. Procédé selon la revendication 11 ou 12, **caractérisé en ce que** le produit en acier recuit est introduit dans le bain de revêtement protégé par une buse dans laquelle une atmosphère de gaz protecteur neutre ou réductrice prédomine.

14. Procédé selon l'une quelconque des revendications 11 à 13, **caractérisé en ce que** le recuit du produit en acier est réalisé de telle sorte qu'une pré-oxydation du produit en acier, une nitration de surface du produit en acier, un guidage réglé du point de condensation ou des combinaisons de ceux-ci soient en outre réalisés.

15. Procédé selon l'une quelconque des revendications 11 à 13, **caractérisé en ce que** le recuit du produit en acier est réalisé de telle sorte qu'une décarburation du produit en acier soit obtenue.

16. Procédé selon l'une quelconque des revendications 8 à 15, **caractérisé en ce que** la surface du produit en acier revêtu par immersion à l'état fondu est écrouie.

17. Procédé selon l'une quelconque des revendications 8 à 16, **caractérisé en ce que** la surface du produit en acier revêtu par immersion à l'état fondu est anodisée.
